# EUROPEAN PATENT SPECIFICATION

(11) **EP 3 168 855 B1**
(45) Date of publication and mention of the grant of the patent: **06.05.2020**
(21) Application number: 15193873.5
(22) Date of filing: 10.11.2015
(51) Int. Cl.: H01H 85/46, G08C 17/02, H01H 85/32, H01H 85/62, H01H 85/02

(54) **FUSE HOLDER**
SICHERUNGSHALTER
PORTE-FUSIBLE

(43) Date of publication of application: 17.05.2017
(73) Proprietor: Tempiro Control AB, 22480 Lund (SE)
(72) Inventor: LINDSTRÖM, Magnus, 224 80 Lund (SE)
(74) Representative: Høiberg P/S

(56) References cited:
- WO-A1-2013/167127
- DE-A1- 10 039 231
- DE-A1-102007 047 920
- US-A1- 2015 301 111

## Description

### Field of the invention

The invention relates to a fuse holder for retaining a fuse in a socket of an electrical cabinet.

### Background of the invention

In electronics and electrical engineering, a fuse is a type of low resistance resistor that acts as a sacrificial device to provide over current protection, of either the load or source circuit. The essential component of a fuse is a metal wire or strip that melts when too much current flows through it, interrupting the circuit that it connects. Short circuits, overloading, mismatched loads, or device failure are the prime reasons for excessive current. Fuses are an alternative to circuit breakers.

A fuse interrupts excessive current "blows" so that further damage by overheating or fire is prevented. Wiring regulations often define a maximum fuse current rating for particular circuits. Over current protection devices are essential in electrical systems to limit threats to human life and property damage. The time and current operating characteristics of fuses are chosen to provide adequate protection without needless interruption. Fuses are manufactured in a wide range of current and voltage ratings to protect wiring systems and electrical equipment.

Upon interrupting an excessive current in a circuit the fuse normally needs to be replaced. However, in electrical installations comprising a plurality of fuses it is hard to see which fuse is broken and need to be replaced.

WO2013167127 (A1) discloses a device according to the preamble of claim 1, and a fuse cap adapted for cooperation with a fuse base. The fuse cap comprises current sensing means for measuring the current though a fuse held in the fuse base by the fuse cap. The fuse cap further comprises a first wireless communication means and a built-in first power supply adapted to harvest energy from the current flowing through the fuse held in the fuse base. A power metering system uses the fuse cap in conjunction with a power meter base station adapted to be plugged into a wall socket.

DE102007047920 (A1) discloses a device comprising measuring devices for detecting a current and voltage of a supplied load. An evaluation unit is provided for evaluating received electrical power and electrical function of the electrical load. A storage unit for storing a determined data, and a processing unit is provided for processing the detected and evaluated data. A transmitter and receiver is provided for transferring the detected and evaluated data at a center and for receiving controlled data. Independent claims are also included for the following: a system for detecting, controlling and optimizing received electrical energy of the electrical load a switchgear is grouped for evaluating three-phase current in a center a method for detecting, controlling and optimizing received electrical energy of the electrical load.

US2015301111 (A1) dicloses a fused switch arrangement for busbar systems or built-in devices, in particular with one or a plurality of fused switch units for purposes of accommodating in each case a fuse holder, which is designed such that it can accommodate a fuse insert, and with a measuring device for purposes of determining electrical operating values of the fused switch arrangement, wherein the measuring device has a set of measurement electronics and at least one display device for purposes of displaying at least one of the electrical operating values determined by the measuring device, and wherein the module comprises at least one coil device, which is designed such that by means of induction it can provide energy for the set of measurement electronics and/or the at least one display device. The present invention furthermore concerns a fuse holder for a module, in particular for a fused switch arrangement.

DE10039231 (A1) discloses undercurrent circuit protection devices in the form of measurement/control protection devices. The current in the undercurrent circuit is measured and supplied as an analog value to a processor for normalization and digitization. A control unit is controlled by a computer to open and close a switch member. The computer obtains and processes data values for documentation and/or monitoring maximum values and/or for switching the switch member on or off according to the maximum values or a time switch program.

### Summary of the invention

It is an object of the present invention to solve at least some of the problems mentioned above.

A fuse holder according to claim 1 is provided. The fuse holder is suitable for retaining a fuse in a socket of an electrical cabinet. The fuse holder comprises a retaining portion being releasable attachable to the socket of the electrical cabinet; an electricity meter configured to measure a current running through an external electrical circuit comprising the fuse and the fuse holder; a switch included in the external electrical circuit and being configured to switch the fuse holder between an active state and an inactive state, wherein in the active state the fuse holder is configured to connect the fuse into the external electrical circuit, and wherein in the inactive state the fuse holder is configured to disconnect the fuse from the external electrical circuit; and a wireless transceiver configured to send information measured by the electricity meter and to receive information for controlling the switch between the active and inactive states.

The fuse holder is combining the functionality of a standard fuse with energy measurement, energy control and wireless communication. The fuse holder provides smart features like remote control of electric heating, boilers and other fixed appliances. The fuse holder provides real time metering of power within the external elctrical circuit and communication of the result through wireless communication. This enables display of power use through e.g. a smart phone application or web application. Moreover, the fuse holder provides remote control of measured load, e.g. a user may remotely disconnect and reconnect power using e.g. a smart phone application or a web application. Moreover, automatic control of electric heating bundled with varying spot price may be provided using the fuse holder. Furthermore, the fuse holder provides for remote supervision of holiday homes which provides security and control to the user. Moreover, the the fuse holder provides a simple and convenient means for detecting if a fuse is working or is "blown".

The fuse holder may further comprise a first coil configured to be comprised in the external electrical circuit and a second coil configured to be comprised in an internal electrical circuit of the fuse holder, wherein the electricity meter and the wireless transceiver are components forming part of the internal electrical circuit, and wherein the first coil (20) and the second coil (22) form an inductive coupling such that data pertaining to the current running through the external electrical circuit (30) is measurable through the inductive coupling. This will increase the safety of the fuse holder. By using the inductive coupling for measuring the current of the external electrical circuit handling of relatively high currents (typically 10 - 32 A) and voltages (typically 110 - 230 VAC) is avoided. The induction coupling provides a proportional but low current and low voltage that can be measured at low cost with good enough result. Directly handling the current and voltages of the external electrical circuit would also drain more power from the external electrical circuit and induce relatively high heat dissipation.

The fuse holder may further comprise a wireless switch controller arranged to wirelessly control the switch, the switch being a wirelessly controllable switch. The safety of the fuse holder is increased since no components of the internal circuit are in galvanic contact with components of the external circuit.

The inductive coupling may be configured to power the components of the internal electrical circuit upon current is running through the external electrical circuit. This provides an energy efficient solution for powering the components of the internal electrical circuit. Moreover, it enhances the lifetime of the fuse holder since electricity is taken from the mains for running the components of the fuse holder.

The fuse holder comprises a power supply configured to power the components of the internal electrical circuit. This increases the time under which the fuse holder may be controlled remotely. Preferably the power supply is used to power the components of the internal electric circuitry of the fuse holder when the fuse is blown or when the switch is set in the inactive state.

The power supply is an internal power supply of the fuse holder. By relying on an internal power supply safety is increased since the risk for electric shocks from the fuse holder is reduced as compared with having a power supply being external to the fuse holder.

The power supply is a battery. The retaining portion is releasable attachable to the socket of the electrical cabinet by means of an Edison type connection.

The fuse may be a diazed-type fuse.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a component" or "the component" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numerals refer to like elements throughout.
Fig. 1 is a schematic cross section view of a fuse holder.
Fig. 2 is a schematic view of external and internal electrical circuits of the fuse holder of Fig. 1.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

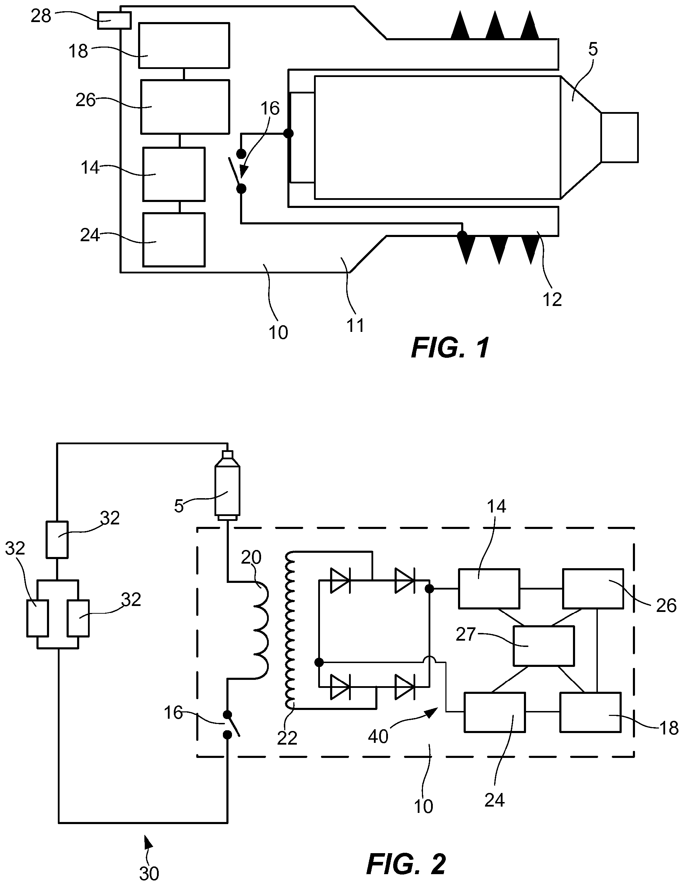

In Fig 1. an embodiment of a fuse holder 10 for retaining a fuse 5 in a socket of an electrical cabinet is illustrated. The fuse holder 10 comprises a retaining portion 12, an electricity meter 14, a switch 16 and a wireless transceiver 18.

The retaining portion 12 is releasable attachable to the socket of the electrical cabinet. As a non-limiting example the retaining portion 12 may be releasable attachable to the socket of the electrical cabinet by means of an Edison type connection. However, it is realized that the retaining portion 12 may be releasable attachable to the socket of the electrical cabinet by other means of fasteners.

As a non-limiting example the fuse 5 may be a plug fuse, e.g. a diazed-type fuse. However, it is realized that also other kind of fuses may be used together with the fuse holder.

In Fig. 2 a circuit diagram comprising an external electrical circuit 30 and an internal electrical circuit 40 is illustrated. The external electrical circuit 30 comprises the fuse 5, at least one components of the fuse holder 10 and other arbitrary electrical components 32. Examples of arbitrary electrical components 32 are home electronics, electrical lamps, electrical heaters and kitchen appliances. The internal electrical circuit 40 is internal of the fuse holder 10. Preferable the internal electrical circuit 40 comprises only components disposed within the fuse holder 10.

The switch 16 of the fuse holder 10 is included in the external electrical circuit 30. The switch 16 is configured to switch the fuse holder 10 between an active state and an inactive state. In the active state the fuse holder 10 is configured to connect the fuse 5 into the external electrical circuit 30. In the inactive state the fuse holder 10 is configured to disconnect the fuse 5 from the external electrical circuit 30.

The electricity meter 14 is comprised in the internal electrical circuit 40. The electricity meter 14 is configured to measure a current running through the external electrical circuit 30.

The wireless transceiver 18 is comprised in the internal electrical circuit 40. The wireless transceiver 18 is configured to send out information measured by the electricity meter 14. The wireless transceiver 18 is configured to receive information for controlling the switch 16 between the active and inactive states. The wireless transceiver 18 may be sending and receiving information in various ways. As non-limiting examples WiFi or mobile telecommunications technology may be used.

The fuse holder 10 may further comprise a housing 11. The housing 11 may be made of ceramic material.

The fuse holder 10 may further comprise a first coil 20. The first coil 20 may be included in the external electrical circuit 30. The fuse holder 10 may further comprise a second coil 22. The second coil 22 may be included in the internal electrical circuit 30. The first coil 20 and the second coil 22 may form an inductive coupling. Data pertaining to the current running through the external electrical circuit 30 may be metered through the inductive coupling. The inductive coupling may further be configured to power the components of the internal electrical circuit 40 upon current is running through the external electrical circuit 30. The transformation in the inductive coupling is determined by the power supply needed. According to a non-limiting example a 50:500 transformation may be used.

The fuse holder 10 may further comprise a wireless switch controller 24. The wireless switch controller 24 is arranged to wirelessly control the switch 16. The switch 16 may be a wirelessly controllable switch. The wireless switch controller 24 may be comprised in the internal electrical circuit 40.

The fuse holder may further comprise a power supply 26. The power supply 26 may be configured to power the components of the internal electrical circuit 40. As a non-limiting example, the power supply 26 may be configured to power the components of the internal electrical circuit 40 upon no current is running through the external electrical circuit 30. The power supply 26 may be an internal power supply of the fuse holder 10. The power supply 26 may be a battery or a capacitor. The battery or capacitor may be rechargeable.

The person skilled in the art realizes that the present invention by no means is limited to the preferred embodiments described above. On the contrary, many modifications and variations are possible within the scope of the appended claims.

For example, the fuse holder 10 may comprise a controller 27. The controller 27 may be hardware and/or software implemented. The controller 27 is configured to control one or more of the components of the fuse holder 10. The controller is arranged to control one or more of the electricity meter 14, the wireless transceiver 18, the wireless switch controller 24 and the power supply 26.

Moreover, the fuse holder 10 may comprise a light source 28, e.g. a LED. The light source 28 is configured to be signaling the state of the fuse; hence if the fuse has been "blown" or is working correctly. Using a LED as the light source, this may be made by indicating a working fuse with a first color of light (e.g. green) and by indicating a "blown" fuse with a second color of light (e.g. red), the second color being different than the first color.

The light source may also be used for signaling the state of the switch 16 of the fuse holder 10. This may be made by indicating the active state with a third color of light (e.g. yellow) and by indicating an inactive state with a forth color of light (e.g. blue), the forth color being different than the third color.

Alternatively, the fuse holder 10 may comprise an additional light source (not shown) for indicating the state of the switch 16 of the fuse holder 10.

Additionally, variations to the disclosed embodiments can be understood and effected by the skilled person in practicing the claimed invention, from a study of the drawings, the disclosure, and the appended claims.

## Claims

1. A fuse holder for retaining a plug fuse (5) in a socket of an electrical cabinet, the fuse holder comprising:
a retaining portion (12) being releasable attachable to the socket of the electrical cabinet, wherein the retaining portion comprises an Edison type connection;
an electricity meter (14) configured to measure a current running through an external electrical circuit (30) comprising the fuse (5) and the fuse holder;
a wireless transceiver (18) configured to send information measured by the electricity meter (14) ;
wherein the electricity meter (14) and the wireless transceiver (18) are components forming part of an internal electrical circuit (40); and
the fuse holder further comprises a power supply (26), wherein the power supply is an internal power supply of the fuse holder,
**characterised in that**:
the fuse holder further comprises a switch (16) included in the external electrical circuit (30) and being configured to switch the fuse holder between an active state and an inactive state, wherein in the active state the fuse holder is configured to connect the fuse (5) into the external electrical circuit (30), and wherein in the inactive state the fuse holder is configured to disconnect the fuse (5) from the external electrical circuit (30);
the wireless transceiver (18) is further configured to receive information for controlling the switch (16) between the active and inactive states;
the power supply (26) is in the form of a battery and is configured to power the components of the internal electrical circuit (40) upon no current is running through the external electrical circuit (30).

2. The fuse holder according to claim 1, wherein the internal electrical circuit (40) further comprises a wireless switch controller (24) arranged to wirelessly control the switch (16), the switch (16) being a wirelessly controllable switch.

3. The fuse holder according to claim 2, wherein the fuse holder further comprises a first coil (20) configured to be comprised in the external electrical circuit (30) and a second coil (22) configured to be comprised in an internal electrical circuit (40) of the fuse holder, wherein the first coil (20) and the second coil (22) form an inductive coupling, and wherein the inductive coupling is configured to power the components of the internal electrical circuit (40) upon current is running through the external electrical circuit (30).

## Patentansprüche

1. Sicherungshalter zum Halten einer Stöpselsicherung (5) in einer Buchse eines Schaltschranks, wobei der Sicherungshalter Folgendes umfasst:
einen Halteabschnitt (12), der lösbar an der Buchse des Schaltschranks befestigt werden kann, wobei der Halteabschnitt eine Edison-Verbindung umfasst;
einen Elektrizitätsmesser (14), der dazu konfiguriert ist, einen Strom zu messen, der durch einen äußeren elektrischen Stromkreis (30) läuft, der die Sicherung (5) und den Sicherungshalter umfasst;
einen drahtlosen Sendeempfänger (18), der dazu konfiguriert ist, Informationen zu senden, die von dem Elektrizitätsmesser (14) gemessen werden;
wobei der Elektrizitätsmesser (14) und der drahtlose Sendeempfänger (18) Komponenten sind, die Teil eines inneren elektrischen Stromkreises (40) sind; und
der Sicherungshalter ferner eine Stromversorgung (26) umfasst, wobei die Stromversorgung eine interne Stromversorgung des Sicherungshalters ist,
**dadurch gekennzeichnet, dass**:
der Sicherungshalter ferner einen Schalter (16) umfasst, der in dem äußeren elektrischen Stromkreis (30) beinhaltet ist und dazu konfiguriert ist, den Sicherungshalter zwischen einem aktiven Zustand und einem inaktiven Zustand zu schalten, wobei der Sicherungshalter in dem aktiven Zustand dazu konfiguriert ist, die Sicherung (5) an den äußeren elektrischen Stromkreis (30) anzuschließen, und wobei der Sicherungshalter in dem inaktiven Zustand dazu konfiguriert ist, die Sicherung (5) von dem äußeren elektrischen Stromkreis (30) zu trennen;
der drahtlose Sendeempfänger (18) ferner dazu konfiguriert ist, Informationen zum Steuern des Schalters (16) zwischen dem aktiven und dem inaktiven Zustand zu empfangen;
die Stromversorgung (26) in der Form einer Batterie vorliegt und dazu konfiguriert ist, die Komponenten des inneren elektrischen Stromkreises (40) mit Energie zu versorgen, nachdem kein Strom durch den äußeren elektrischen Stromkreis (30) läuft.

2. Sicherungshalter nach Anspruch 1, wobei der innere elektrische Stromkreis (40) ferner eine drahtlose Schaltersteuerung (24) umfasst, die dazu ausgelegt ist den Schalter (16) drahtlos zu steuern, wobei der Schalter (16) ein drahtlos steuerbarer Schalter ist.

3. Sicherungshalter nach Anspruch 2, wobei der Sicherungshalter ferner eine erste Spule (20), die dazu konfiguriert ist, in dem äußeren elektrischen Stromkreis (30) umfasst zu sein, und eine zweite Spule (22) umfasst, die dazu konfiguriert ist, in einem inneren elektrischen Stromkreis (40) des Sicherungshalters umfasst zu sein, wobei die erste Spule (20) und die zweite Spule (22) eine induktive Kopplung herstellen und wobei die induktive Kopplung dazu konfiguriert ist, die Komponenten des inneren elektrischen Stromkreises (40) mit Energie zu versorgen, nachdem Strom durch den äußeren elektrischen Stromkreis (30) fließt.

## Revendications

1. Porte-fusible destiné à retenir un fusible bouchon (5) dans une prise d'un tableau électrique, le porte-fusible comprenant :
une portion de retenue (12) qui peut être attachée de manière détachable à la prise du tableau électrique, dans lequel la portion de retenue comprend une connexion de type Edison ;
un compteur électrique (14) conçu pour mesurer un courant circulant à travers un circuit électrique externe (30) comprenant le fusible (5) et le porte-fusible ;
un émetteur-récepteur sans fil (18) conçu pour envoyer des informations mesurées par le compteur électrique (14) ;
dans lequel le compteur électrique (14) et l'émetteur-récepteur sans fil (18) sont des composants faisant partie d'un circuit électrique interne (40) ; et
le porte-fusible comprend en outre une alimentation électrique (26),
dans lequel l'alimentation électrique est une alimentation électrique interne du porte-fusible,
**caractérisé en ce que** :
le porte-fusible comprend en outre un commutateur (16) inclus dans le circuit électrique externe (30) et qui est conçu pour effectuer une commutation du porte-fusible entre un état actif et un état inactif, dans lequel dans l'état actif le porte-fusible est conçu pour connecter le fusible (5) dans le circuit électrique externe (30), et dans lequel dans l'état inactif le porte-fusible est conçu pour déconnecter le fusible (5) du circuit électrique externe (30) ;
l'émetteur-récepteur sans fil (18) est en outre conçu pour recevoir des informations afin de commander le commutateur (16) entre les états actif et inactif ;
l'alimentation électrique (26) se présente sous la forme d'une batterie et est conçue pour alimenter les composants du circuit électrique interne (40) lorsqu'aucun courant ne circule à travers le circuit électrique externe (30).

2. Porte-fusible selon la revendication 1, dans lequel le circuit électrique interne (40) comprend en outre un dispositif de commande de commutateur sans fil (24) agencé pour commander sans fil le commutateur (16), le commutateur (16) étant un commutateur à commande sans fil.

3. Porte-fusible selon la revendication 2, dans lequel le porte-fusible comprend en outre un premier enroulement (20) conçu pour être compris dans le circuit électrique externe (30) et un second enroulement (22) conçu pour être compris dans un circuit électrique interne (40) du porte-fusible, dans lequel le premier enroulement (20) et le second enroulement (22) forment un couplage inductif, et dans lequel le couplage inductif est conçu pour alimenter les composants du circuit électrique interne (40) lorsqu'un courant circule à travers le circuit électrique externe (30).
